(19) Europäisches Patentamt
European Patent Office
Office européen des brevets

(11) Publication number: **0 429 215 A2**

# (12) EUROPEAN PATENT APPLICATION

(21) Application number: **90312156.4**

(22) Date of filing: **07.11.90**

(51) Int. Cl.5: **C08F 291/14**, C08F 257/00, C08F 265/04, C08F 8/14, C08F 2/06, C09D 151/00

(30) Priority: **20.11.89 GB 8926210**
**18.09.90 GB 9020375**

(43) Date of publication of application:
**29.05.91 Bulletin 91/22**

(84) Designated Contracting States:
**AT BE CH DE DK ES FR GB GR IT LI LU NL SE**

(71) Applicant: **IMPERIAL CHEMICAL INDUSTRIES PLC**
**Imperial Chemical House, Millbank**
**London SW1P 3JF(GB)**

(72) Inventor: **Mollett, Christopher Charles**
**10 Gonsley Close**
**Northgate Village, Chester, Cheshire(GB)**
Inventor: **Fletcher, Erika Maria**
**91 Kingsheath Avenue**
**Dovecote, Liverpool L14(GB)**
Inventor: **Gerrard, John Jeffrey**
**36 Ashbrook Avenue, Sutton Weaver**
**Runcorn, Cheshire WA7 3HD(GB)**

(74) Representative: **Sheller, Alan et al**
**Imperial Chemical Industries PLC Legal Department: Patents PO Box 6**
**Welwyn Garden City Herts, AL7 1HD(GB)**

## (54) Production of polymer system for water-erodible coatings.

(57) Production of a polymer system having utility as the active water-erodible constituent of coating compositions suitable for the treatment of surfaces so as to provide a water-erodible coating thereon. A two stage process is involved in which a first polymer comprising units of styrene sulphonyl halide is formed, and then a second polymer containing little or no styrene sulphonyl halide is formed in the presence of the first polymer, or vice versa, followed by esterification of the acid halide groups with an alkanol (preferably methanol). The polymer system also comprises styrene units, and, particularly preferably, units of an alkyl methacrylate incorporated in the first and/or second polymerisations.

EP 0 429 215 A2

## PRODUCTION OF POLYMER SYSTEM FOR WATER-ERODIBLE COATINGS

The present invention relates to a process for the production of a certain polymer system having utility as an active constituent of coating compositions suitable for the treatment of surfaces so as to provide water-erodible coatings thereon. The invention also relates to a polymer system made using such a process, the coating compositions containing such a polymer system and to the treatment of surfaces using the compositions.

The problems caused by the adhesion of living organisms to surfaces, especially to surfaces subjected to an aqueous environment, are well known. An example is the fouling of underwater surfaces in, for example, the sea, rivers, lakes, canals, swimming pools, industrial plant, pipes etc. This fouling is caused by the attachment to those surfaces of a variety of micro and other organisms which then grow and multiply so as eventually to cause a significant problem in relation to the surface concerned. Of particular importance is the case of a ship's hull; the growth of marine organisms thereon increases the frictional resistance of the hull to passage through water and so increases fuel consumption and/or reduces the speed of the ship. Removal of the growths by cleaning and repainting the ship's hull in a dry dock is extremely expensive and time-consuming.

One approach to these problems has been to use biocides (by "biocides" is meant herein substances which are toxic to and destroy various types of microorganisms and include eg fungicides, algicides, etc). Thus, it is known to apply to ships' hulls antifouling coatings in which the active ingredient is a biocide which is slowly released from the coating over a period in sufficient concentration to be lethal to marine organisms in the immediate vicinity of the protected surface. Eventually the concentration of biocide in the coating falls below the lethal concentration and the coating must be renewed. For a time, this method provides an effective means of reducing surface fouling.

An alternative and widely used development has been the use of antifouling coatings containing erodible polymers comprising hydrolysable organotin biocide groups; in such polymers the organo tin biocide compound is present as hydrolysable groups attached to the polymer backbone. Hydrolysis of these linkages releases toxic organotin material, leaving a water erodible polymer residue, which is subsequently removed by motion of the vessel through the sea-water. A fresh surface is thus revealed. Such action produces a "self-polishing" effect and can increase fuel efficiency. In addition, release of organotin biocide is relatively constant during the lifetime of the coating.

In our European Patent Publication 0232006 A2 there is described coating compositions containing certain tin- free polymers having backbone-pendant hydrolysable groups selected from sulphonate esters and sulphate esters (particularly the former) which in an aqueous environment will generate corresponding acid groups. Thus when a surface is coated using a composition according to the invention of EP 0232006. the resulting dried coating is water-erodible in an aqueous environment by virtue of polymer-bound acid groups being formed from the sulphonate (or sulphate) ester groups by hydrolysis, these acid groups being (at least for the most part) located on polymeric material in the environment-exposed exterior portion of the coating. The acid groups render water-erodible the polymeric residues to which they are attached so that an outer surface comprised of fresh unhydrolysed polymer molecules is continually formed, ie the polymer likewise exhibits a "self-polishing" effect.

The disclosure of EP 0232006 particularly mentions and exemplifies coating compositions comprising organic solvent solutions of erodible polymers comprising sulphonate ester-containing repeat units of formula

$$\begin{array}{l} -CH_2-\underset{|}{C}H- \\ \qquad\;\; Ph-SO_2OR \end{array}$$

where -Ph- is para phenylene and R is alkyl; repeat units derived from styrene; and repeat units derived from at least one other olefinically unsaturated monomer, such as an alkyl ester of an olefinically unsaturated carboxylic acid. The sulphonate ester-containing units are conveniently prepared by first making a corresponding precursor polymer employing styrene p-sulphonyl chloride which will yield repeat units of formula

$$-CH_2-\overset{}{C}H-$$
$$\quad\quad\quad | $$
$$\quad\quad Ph-SO_2Cl$$

together with the monomers yielding the other repeat units in the final polymer, and then esterifying the backbone-pendant sulphonyl chloride groups with an alkanol of formula ROH to yield the sulphonate-ester containing polymer.

Such polymers, which in the examples of EP 0232006 are prepared using single-stage polymerisation processes to make the precursor polymers, do require the use of styrene p-sulphonyl chloride for their production, and it is the case that this monomer is a costly material. It would therefore be advantageous if significantly less of the monomer could be used in the production of an erodible polymer without any loss in performance of the resulting erodible coating.

We have now discovered a process for the production of a polymer system having backbone-pendant sulphonate alkyl ester groups derived from the polymerisation of a styrene sulphonyl halide which polymer system is significantly more effective with regard to erosion performance than any polymer hitherto prepared by us having pendant sulphonate alkyl ester groups (also derived from a styrene sulphonyl halide at an equivalent level). Consequently, this will make it possible to employ styrene sulphonyl halide for the production of an erodible polymer system within the general scope of EP 0232006 at a significantly lower level than has been previously possible without any drop in erosion performance; conversely it has allowed the production of a polymer system, using styrene sulphonyl halide, of significantly improved performance in comparison to any polymer hitherto prepared by us which has also employed the use of styrene sulphonyl halide at an equivalent level.

According to the present invention there is provided a process for the production of a polymer system, which process comprises:

(i) performing a free-radical-initiated polymerisation in an organic solvent medium using a monomer mixture comprising 5 to 40 mole% of styrene sulphonyl halide and at least one monomer selected from styrene and one or more other olefinically unsaturated monomers, and wherein at least 70 weight% of the styrene sulphonyl halide used in said polymerisation (i) is present at the start of the polymerisation, thereby to form a polymer A;

(ii) performing another free-radical-initiated polymerisation in an organic solvent medium using a monomer mixture which comprises not more than 10 mole% of styrene sulphonyl halide, and also comprises at least one monomer selected from styrene and one or more other olefinically unsaturated monomers, thereby to form a polymer B;

and wherein either polymerisation (i) is performed before polymerisation (ii) in which case polymerisation (ii) is carried out in the presence of polymer A, or polymerisation (ii) is performed before polymerisation (i) in which case polymerisation (i) is carried out in the presence of polymer B,

and wherein the level of styrene sulphonyl halide employed on the basis of all the monomers employed in polymerisations (i) and (ii) is within the range of from 4 to 20 mole%, and wherein styrene must be employed in (i) and/or (ii) to provide a level of styrene which is at least 10 mole% based on all the monomers employed in (i) and (ii), and wherein one or more other olefinically unsaturated other monomers must be employed in (i) and/or (ii) to provide a level of other olefinically unsaturated monomer(s) which is at least 10 mole% based on all the monomers employed in (i) and (ii); and

(iii) esterifying at least 50% of the sulphonyl halide groups in the polymer system so formed using an alkanol of 1 to 5 carbon atoms in the alkyl group to form corresponding sulphonate alkyl ester groups.

In polymerisation (i), the level of styrene sulphonyl halide in the monomer mixture is preferably 5 to 30 mole %. Also in polymerisation (i) % it is preferred that substantially 100 weight % (ie all or substantially all) of the styrene sulphonyl halide used therein is present at the start of the polymerisation.

In polymerisation (ii), the level of styrene sulphonyl halide in the monomer mixture is preferably not more than 5 mole %, and more preferably the monomer mixture comprises no styrene sulphonyl halide.

In the process according to the invention it is less preferable to perform polymerisation (ii) before polymerisation (i) (ie it is more preferred too perform polymerisation (i) before polymerisation (ii)).

With regard to the level of styrene sulphonyl halide employed in the process on the basis of all the monomers employed in polymerisations (i) and (ii) (ie the overall level), this is preferably within the range of from 4 to 15 mole%, more preferably 4 to 13 mole %. Also it is preferred that styrene is employed in (i) and/or (ii) to provide a level of styrene which is within the range of from 10 to 60 mole % based on all the monomers employed in (i) and (ii). It is also preferred that said one or more other olefinically unsaturated other monomers is employed in (i) and/or (ii) to provide a level of other olefinically unsaturated monomer(s)

which is within the range of from 25 to 86 mole % based on all the monomers employed in (i) and (ii).

With regard to the esterification step (iii), it is preferred that at least 80%, and more preferably all (or substantially all) of the sulphonyl halide groups in the polymer system so formed are esterified to corresponding sulphonate alkyl ester groups. It is also preferred that the alkyl groups of the sulphonate alkyl ester groups are methyl groups, with the alkanol employed being methanol.

It is to be understood that the levels of monomers used in polymerisation (i) must come to a total of 100 mole%; similarly the levels of monomers used in polymerisation (ii) must come to a total of 100 mole%. When speaking of the overall levels of monomers used in (i) and (ii), ie based on all the monomers used in (i) and (ii), such overall levels must also come to a total of 100 mole%.

The styrene sulphonyl halide employed in the process is normally the fluoride or chloride, and particularly the chloride.

The result of the process is the production of a polymer system comprising polymers A and B in admixture. In the preferred case where (i) is performed before (ii), it is believed that some form or degree of grafting to polymer A occurs during the production of polymer B in the presence of polymer A; similarly where (ii) is performed before (i), it is believed that some form or degree of grafting to polymer B occurs during the production of polymer A in the presence of polymer B. However, the exact mechanism or reason for the improved performance is not clear to us and we do not wish to be bound by any particular theory.

It is found that a polymer system comprising polymers A and B as made by the defined process possesses a significantly improved water erosion performance (when incorporated as the erosion-active constituent of a coating applied to a substrate surface) in comparison to that of a single polymer having the same repeat units and a level of sulphonate alkyl ester grcups (similarly derived from styrene sulphonyl halide) comparable to that of the overall level of sulphonate alkyl ester units in the polymer system A/B. Alternatively, a polymer system comprising polymers A and B made by the defined process will expect to possess a comparable level of water-erosion performance to that of a single polymer having the same repeat units and a significantly higher level of sulphonate alkyl ester groups (similarly derived from styrene sulphonyl halide) than that of the overall level of sulphonate alkyl ester groups in the polymer system A/B.

The improved performance achieved by the polymer system made by the defined process is most surprising.

Below the lower level of 4 mole% styrene sulphonyl halide (overall), a useful effect with regard to erosion performance tends not to be achieved. Above the upper level of 20 mole% styrene sulphonyl halide (overall), physical properties (particularly film strength) tend to be adversely affected (the polymer system is too water soluble) and the material is anyway very expensive (above 15 mole% is also rather costly).

The polymerisations (i) and (ii) are solution polymerisations in a suitable organic solvent. Examples of suitable solvents include alkanols such as methanol, ethanol, n-propanol and iso-propanol, ketones such as methyl ethyl ketone and acetone, aromatic solvents such as toluene and xylene, and common chlorinated solvents such as trichloroethylene, methylene chloride, chloroform and carbon tetrachloride. A particularly preferred organic solvent is xylene: this can be eg technical xylene (usually a mixture of isomers) and we have successfully used commercially- available general purpose xylene.

When polymerisation (ii) is carried out subsequently to polymerisation (i), (ii) is usually effected by simply adding the monomers used therein to the polymerisation medium resulting from (i) - although it would in principle be possible to isolate A and use the isolated polymer in the polymerisation process of (ii). Similar comments apply mutatis mutandis when (ii) is carried out before (i).

The one or more other olefinically unsaturated monomers employed in (i) and/or (ii) (ie monomer(s) other than styrene sulphonyl halide and styrene), which may be the same or different if employed in both (i) and (ii), can be any olefinically unsaturated monomer provided its or their use does not deleteriously affect the polymerisations (i) and (ii), and the esterification step (iii). Examples of such monomers include vinyl halides such as vinylidene chloride and vinyl chloride, vinyl esters such as vinyl acetate, vinyl propionate and vinyl laurate, and esters of olefinically unsaturated carboxylic acids.

It is preferred that said one or more other olefinically unsaturated monomers comprises at least an ester of acrylic acid or methacrylic acid of formula:

$CH_2 = CR^1COOR^2$

where $R^1$ is H or methyl and $R^2$ is alkyl or cycloalkyl of 1 to 20 carbon atoms (more preferably 1 to 8 carbon atoms) examples of which are methyl acrylate, methyl methacrylate, ethyl acrylate, ethyl methacrylate, n-butyl acrylate, n-butyl methacrylate, 2-ethylhexyl acrylate, 2-ethylhexyl methacrylate, isopropyl acrylate, isopropyl methacrylate, n-propyl acrylate and n-propyl methacrylate.

Furthermore, it is particularly preferred that at least one alkyl methacrylate having 1 to 5 carbon atoms (typically 1 to 4 carbon atoms) in the alkyl group is included in polymerisation (i) and/or (ii) since this can provide a particularly significant improvement in the erosion performance of the resulting polymer system.

In an especially preferred embodiment of this, at least one alkyl methacrylate is employed in at least polymerisation (ii) and more preferably in both polymerisation (i) and polymerisation (ii).

The level of alkyl methacrylate(s) in polymerisation (i), is preferably within the range of 0 to 50 mole%, more preferably 10 to 40 mole%. The level of alkyl methacrylate(s) in polymerisation (ii), is preferably at least 10 mole%, more preferably within the range of from 10 to 70 mole%, and particularly within the range of from 10 to 65 mole%. The overall level of alkyl methacrylate(s) in (i) and (ii) is preferably at least 5 mole%, more preferably within the range of from 5 to 65 mole%, and particularly within the range of from 15 to 60 mole%.

Preferred alkyl methacrylates are methyl methacrylate, and in particular, n-butyl methacrylate.

It is also useful for at least one alkyl acrylate having 1 to 8 carbon atoms in the alkyl groups to be included in polymerisation (i) and/or (ii) since this can be of assistance in adjusting other properties of the resulting polymer systems, such as glass transition temperature (Tg). In such an embodiment, it is more preferred to have at least one alkyl acrylate in at least polymerisation (i) and often in both polymerisations (i) and (ii). The level of alkyl acrylate(s) in polymerisation (i) is preferably within the range 20 to 90 mole% (more preferably 20 to 80 mole%). The level of alkyl acrylate(s) in polymerisation (ii) is preferably within the range 0 to 50 mole% (more preferably 0 to 30 mole%). The overall level of alkyl acrylate in (i) and (ii), if employed, is preferably at least 10 mole%, more preferably within the range of from 10 to 50 mole%, and particularly within the range of from 15 to 45 mole%.

Preferred alkyl acrylates are n-butyl acrylate and 2-ethylhexyl acrylate.

Styrene must be present overall as defined supra ie it must be present in at least one of polymerisation stages (i) and (ii), and is preferably present in at least (ii). The overall level of styrene in (i) and (ii) is at least 10 mole%, more preferably within the range of from 10 to 60 mole%, and particularly within the range of from 15 to 50 mole%. More preferably styrene is present only in (ii), the level of styrene in (i) being zero in such a case (and the presence of at least one other olefinically unsaturated monomer in (i) being essential). The level of styrene in (ii) is preferably within the range of from 10 to 100 mole% (more preferably 20 to 100 mole%, and particularly 20 to 80 mole%) (with the presence of at least one other olefinically unsaturated monomer in (ii) being optional but usually preferred).

Typical processes according to the invention comprise the following monomers:

-in polymerisation (i);

5 to 30 mole% (more preferably 10 to 30 mole%) of styrene sulphonyl halide,

0 mole% of styrene,

0 to 50 mole% (more preferably 10 to 40 mole%) of at least one C1 to C5 alkyl methacrylate, and 20 to 90 mole% (more preferably 20 to 80 mole%) of at least one C1 to C8 alkyl acrylate

- in polymerisation (ii);

0 to 10 mole% (more preferably 0 mole%) of styrene sulphonyl chloride,

20 to 80 mole% (more preferably 20 to 75 mole%) of styrene,

10 to 70 mole% (more preferably 10 to 65 mole%) of at least one C1 to C5 alkyl methacrylate, and

0 to 50 mole% (more preferably 0 to 30 mole%) of at least one C1 to C8 alkyl acrylate.

- overall in (i) and (ii);

4 to 15 mole% (more preferably 4 to 13 mole%) of styrene sulphonyl halide,

10 to 60 mole% (more preferably 15 to 50 mole%) styrene

5 to 65 mole% (more preferably 15 to 60 mole%) of at least one C1 to C5 alkyl methacrylate, and

10 to 50 mole% (more preferably 15 to 45 mole%) of at least one C1 to C8 alkyl acrylate.

Minor amounts of other monomers could, if desired, be used in the above typical processes.

In the process of the invention, it is usual in (i) for at least 70 weight% (preferably 100 weight%) of the monomer(s) used in addition to styrene sulphonyl halide to also be present at the start of polymerisation.

It is also usual in (ii) for at least 70 weight% (preferably 100 weight%) of all the monomer(s) used therein to be present at the start of polymerisation.

We believe that the polymer system produced using the defined process is also a novel composition of matter, and a claim is therefore made to this polymer system.

The glass transition temperature Tg of the polymer system (ie the overall system) is usually within the range of from 0 to 30°C, more usually 2 to 20°C. The Tg of the individual polymer A produced in (i) is usually within the range of from -30 to 30°C, more usually -20 to 20°C; the Tg of the individual polymer B produced in (ii) is usually within the range of 10 to 100°C, more usually 15 to 50°C. (NB the absence of a negative sign before a temperature means, as is conventional, that a positive value is intended).

Usually the polymers A and B, and the overall polymer system, will have a weight average molecular weight within the range 5000 to 500,000.

There is further provided according to the invention a coating composition which comprises a polymer

system according to the invention carried in an organic solvent medium. When such a coating composition is applied to the surface of a substrate, and the liquid medium of the coating removed (eg by natural or accelerated drying), the result is a water-erodible coating. By this is meant that the environment-exposed surface of the coating is removable under thee conditions of use to which the coated surface is subjected; this may involve simple dissolution in the aqueous environment but more usually involves relatively facile but slow removal thereof as a result of relative motion in the vicinity of the coated surface, eg by motion of the surface (being eg part of a vessel, eg a ship's hull) through water or by the passage of water over the stationery surface (being eg part of a water-conveying conduit or pipe). If the coating also contains a biocide, that portion of it associated with the polymer being released at the surface of the coating is also released at the same time into the aqueous environment thereby creating an anti-fouling action in addition to a self-polishing effect.

The polymer system of the coating composition is normally substantially completely dissolved in the organic solvent carrier medium. The weight ratio of the polymer system/organic solvent carrier is usually in the range of from 1/5 to 1/1, more usually 1/3 to 1/1. A typical organic carrier may if desired comprise (completely or partly) the organic solvent medium present at the end of stage (iii) of the process of the invention, and the end-product of the process (including the organic solvent present) may if desired serve as the basis for a coating formulation according to the invention (with further solvent and other materials being added as necessary).

The coating composition may include other ingredients, examples of which include pigments such as cuprous oxide and calcium carbonate, other types of polymeric materials, and biocides of one sort or another (eg alcides, fungicides, bacteriocides) so as to impart or enhance antifouling behaviour, stabilisers, fillers, dyes, anti-rust agents, coalescing agents and/or any other material required for any particular application. Such substances (if used) may be incorporated or formulated into the composition by any suitable technique. It is particularly envisaged that the composition will be in the form of a paint for application to the surface, and will therefore include materials commonly used in paint formulations, such as pigments and other ingredients where appropriate (extenders, stabilisers, thickeners, coalescing solvents, defoamers, surfactants, and so on).

The solids content of a coating composition according to the invention is typically within the range of 45 to 85 weight%, more usually 50 to 85 weight%.

The coating composition of the invention is applicable to a variety of solid objects, for example, vessels, pipes and machinery of all types, eg stills and paper mills, having one or more surfaces that will come into contact with an aqueous medium capable of eroding the surface of the applied coating. The coating is especially applicable to the hulls of ships and boats and to other structures used in a marine environment. Moreover, the object which is treated in accordance with the coating composition of the invention may itself be a solid coating, for example a paint coating which has been applied to a substrate for protective or decorative purposes and which itself requires protection from adhesive organisms.

Surfaces which may be treated in accordance with the composition of the invention include the surfaces of inorganic materials such as metals, glass or silica and organic materials such as wood, plastics, and other polymeric materials such as the aforementioned coatings.

The most suitable technique for applying the composition to the surface depends upon the particular composition and surface involved and also upon the situation in which infestation is likely to occur. Application by brush, roller, pad, dipping, and spraying are eg envisaged where appropriate.

The present invention is now illustrated by reference to the following examples. Unless otherwise specified, all parts, percentages and ratios are on a weight basis.

In the examples the following abbreviations are employed.

St : styrene

SSC : styrene p-sulphonyl chloride ($CH_2=CH\text{-}Ph\text{-}SO_2Cl$ where Ph is para phenylene)

BA : n-butyl acrylate

BMA : n-butyl methacrylate

MMA : methyl methacrylate

Tg : glass transition temperature; Tg of stage 1 and 2 polymers calculated from individual components; Tg of overall polymer system measured using Differential Scanning Calorimetry (found to correspond closely to calculated values)

In the examples, the following generalised recipe was employed for the preparation of the polymer systems.

A stage 1 monomer mixture (for use in polymerisation stage (i)) is charged to a reactor (equipped with a condenser, stirrer and nitrogen bleed) such that the final polymer solids content is 30 weight %. In all cases the polymerisation temperature is 90°C, the solvent used is xylene, and the initiator used is

azobisisobutyronitrile AIBN (2 mole % based on monomer charge). The details of the stage 1 monomer charges are given in the detailed recipes hereinafter.

On completion of the stage 1 (ie polymerisation (i)) reaction, a second change of monomer mixture, corresponding to stage 2 mixture (for use in polymerisation stage (ii)) is added such that the final solids content after polymerisation is 50 weight %. Again, in all cases the polymerisation temperature is 90 °C and the initiator used is AIBN (2 mole % based on monomer charged). The details of the stage 2 monomer charges are given in the detailed recipes hereinafter.

Upon completion of the second stage polymerisation, the polymer solution is esterified with methanol in the presence of an acid acceptor (usually triethylamine) at stoichiometric levels, followed by filtration to yield the polymer system.

EXAMPLES 1 to 17

Polymer systems, corresponding to Examples 1 to 17, were prepared using the above general recipe. The specific details of each recipe were as follows.

| Example 1 recipe | | | | |
|---|---|---|---|---|
| Monomer | Monomer levels (mole %) | Charge (g) | Overall monomer levels (mole %) | |
| (1st stage) | | | | |
| SSC | 20 | 19.01 | SSC | 6.0% |
| BA | 55 | 33.13 | St | 16.6% |
| BMA | 25 | 16.71 | BA | 26.5% |
| St | 0 | 0.00 | BMA | 32.8% |
| | 1st stage weight (g) | 68.84 | MMA | 18.1% |
| (2nd stage) | | | | |
| St | 23.7 | 26.92 | | |
| BA | 14.2 | 19.88 | | |
| BMA | 36.2 | 56.13 | | |
| MMA | 25.9 | 28.23 | | |
| | 2nd stage weight (g) | 131.16 | | |
| 1st stage Tg -8.5 °C | | | Overall Tg +16.2 °C | |
| 2nd stage Tg +31 °C | | | | |

| Example 2 recipe | | | | |
|---|---|---|---|---|
| Monomer | Monomer levels (mole %) | Charge (g) | Overall monomer levels (mole %) | |
| (1st stage) | | | | |
| SSC | 20.0 | 15.82 | SSC | 5.0% |
| BA | 55.0 | 27.56 | St | 16.7% |
| BMA | 25.0 | 13.90 | BA | 26.6% |
| St | 0 | 0.00 | BMA | 33.1% |
| | 1st stage weight (g) | 57.27 | MMA | 18.7% |
| (2nd stage) | | | | |
| St | 22.1 | 27.28 | | |
| BA | 17.2 | 26.06 | | |
| BMA | 35.8 | 60.04 | | |
| MMA | 24.8 | 29.36 | | |
| | 2nd stage weight (g) | 142.73 | | |
| 1st stage Tg -8.5° C | | | Overall Tg +15.4° C | |
| 2nd stage Tg +26.2° C | | | | |

| Example 3 recipe | | | | |
|---|---|---|---|---|
| Monomer | Monomer levels (mole %) | Charge (g) | Overall monomer levels (mole %) | |
| (1st stage) | | | | |
| SSC | 20.0 | 12.87 | SSC | 4.0% |
| BA | 55.0 | 22.43 | St | 16.8% |
| BMA | 25.0 | 11.31 | BA | 25.7% |
| St | 0 | 0.00 | BMA | 35.4% |
| | 1st stage weight (g) | 46.61 | MMA | 18.2% |
| (2nd stage) | | | | |
| St | 21.0 | 27.50 | | |
| BA | 18.2 | 29.36 | | |
| BMA | 38.0 | 67.86 | | |
| MMA | 22.8 | 28.67 | | |
| | 2nd stage weight (g) | 153.39 | | |
| 1st stage Tg -8.5° C | | | Overall Tg +15.2° C | |
| 2nd stage Tg +23.2° C | | | | |

| Example 4 recipe | | | | |
|---|---|---|---|---|
| Monomer | Monomer levels (mole %) | Charge (g) | Overall monomer levels (mole %) | |
| (1st stage) | | | | |
| SSC | 20.0 | 9.74 | SSC | 3.0% |
| BA | 55.0 | 16.98 | St | 17.9% |
| BMA | 25.0 | 8.56 | BA | 25.3% |
| St | 0 | 0.00 | BMA | 35.5% |
| | 1st stage weight (g) | 35.29 | MMA | 18.2% |
| (2nd stage) | | | | |
| St | 21.0 | 29.60 | | |
| BA | 20.0 | 34.58 | | |
| BMA | 37.4 | 71.59 | | |
| MMA | 21.5 | 28.94 | | |
| | 2nd stage weight (g) | 164.71 | | |
| 1st stage Tg -8.5° C | | | Overall Tg +15.1° C | |
| 2nd stage Tg +20.6° C | | | | |

| Example 5 recipe | | | | |
|---|---|---|---|---|
| Monomer | Monomer levels (mole %) | Charge (g) | Overall monomer levels (mole %) | |
| (1st stage) | | | | |
| SSC | 20.0 | 6.60 | SSC | 2.0% |
| BA | 55.0 | 11.51 | St | 18.9% |
| BMA | 25.0 | 5.80 | BA | 25.0% |
| St | 0 | 0.00 | BMA | 35.7% |
| | 1st stage weight (g) | 23.92 | MMA | 18.4% |
| (2nd stage) | | | | |
| St | 21.0 | 31.45 | | |
| BA | 21.6 | 39.76 | | |
| BMA | 36.9 | 75.45 | | |
| MMA | 20.5 | 29.43 | | |
| | 2nd stage weight (g) | 176.08 | | |
| 1st stage Tg -8.5° C | | | Overall Tg +15° C | |
| 2nd stage Tg +18.4° C | | | | |

| Example 6 recipe | | | | |
|---|---|---|---|---|
| Monomer | Monomer levels (mole %) | Charge (g) | Overall monomer levels (mole %) | |
| (1st stage) | | | | |
| SSC | 20.0 | 39.00 | SSC | 12.5% |
| BA | 65.7 | 81.17 | St | 37.5% |
| BMA | 14.3 | 19.60 | BA | 41.1% |
| St | 0 | 0.00 | BMA | 8.9% |
| | 1st stage weight (g) | 139.77 | | |
| (2nd stage) | | | | |
| St | 100.0 | 60.23 | | |
| BA | 0 | 0.00 | | |
| BMA | 0 | 0.00 | | |
| | 2nd stage weight (g) | 60.23 | | |
| 1st stage Tg -15.9° C | | | Overall Tg +10.6° C | |
| 2nd stage Tg +100° C | | | | |

| Example 7 recipe | | | | |
|---|---|---|---|---|
| Monomer | Monomer levels (mole %) | Charge (g) | Overall monomer levels (mole %) | |
| (1st stage) | | | | |
| SSC | 20.0 | 37.81 | SSC | 12.4% |
| BA | 62.8 | 75.23 | St | 27.3% |
| BMA | 17.2 | 22.86 | BA | 45.2% |
| St | 0 | 0.00 | BMA | 15.0% |
| | 1st stage weight (g) | 135.89 | | |
| (2nd stage) | | | | |
| St | 72.1 | 42.82 | | |
| BA | 16.4 | 11.98 | | |
| BMA | 11.5 | 9.30 | | |
| | 2nd stage weight (g) | 64.11 | | |
| 1st stage Tg -14° C | | | Overall Tg +2.4° C | |
| 2nd stage Tg +45° C | | | | |

| Example 8 recipe | | | | |
|---|---|---|---|---|
| Monomer | Monomer levels (mole %) | Charge (g) | Overall monomer levels (mole %) | |
| (1st stage) | | | | |
| SSC | 20.0 | 37.49 | SSC | 12.5% |
| BA | 62.8 | 74.60 | St | 23.1% |
| BMA | 17.2 | 22.67 | BA | 43.0% |
| St | 0 | 0.00 | BMA | 21.4% |
| | 1st stage weight (g) | 134.76 | | |
| (2nd stage) | | | | |
| St | 61.7 | 35.71 | | |
| BA | 10.0 | 7.13 | | |
| BMA | 28.3 | 22.40 | | |
| | 2nd stage weight (g) | 65.24 | | |
| 1st stage Tg -14°C | | | Overall Tg +2.6°C | |
| 2nd stage Tg +44.4°C | | | | |

| Example 9 recipe | | | | |
|---|---|---|---|---|
| Monomer | Monomer levels (mole %) | Charge (g) | Overall monomer levels (mole %) | |
| (1st stage) | | | | |
| SSC | 20.0 | 8.41 | SSC | 6.0% |
| BA | 30.0 | 7.99 | St | 34.5% |
| BMA | 50.0 | 14.78 | BA | 27.1% |
| St | 0 | 0.00 | BMA | 32.4% |
| | 1st stage weight (g) | 31.19 | | |
| (2nd stage) | | | | |
| St | 49.2 | 25.12 | | |
| BA | 25.8 | 16.26 | | |
| BMA | 25.0 | 17.44 | | |
| | 2nd stage weight (g) | 58.81 | | |
| 1st stage Tg -9.9°C | | | Overall Tg +15.5°C | |
| 2nd stage Tg +18.5°C | | | | |

| Example 10 recipe | | | | |
|---|---|---|---|---|
| Monomer | Monomer levels (mole %) | Charge (g) | Overall monomer levels (mole %) | |
| (1st stage) | | | | |
| SSC | 20.0 | 8.31 | SSC | 5.9% |
| BA | 43.0 | 11.33 | St | 34.4% |
| BMA | 37.0 | 10.81 | BA | 27.4% |
| St | 0 | 0.00 | BMA | 32.4% |
| | 1st stage weight (g) | 30.45 | | |
| (2nd stage) | | | | |
| St | 48.8 | 25.04 | | |
| BA | 20.8 | 13.17 | | |
| BMA | 30.4 | 21.33 | | |
| | 2nd stage weight (g) | 59.55 | | |
| 1st stage Tg -0.1 °C | | | Overall Tg +5.2 °C | |
| 2nd stage Tg +23.4 °C | | | | |

| Example 11 recipe | | | | |
|---|---|---|---|---|
| Monomer | Monomer levels (mole %) | Charge (g) | Overall monomer levels (mole %) | |
| (1st stage) | | | | |
| SSC | 20.0 | 8.58 | SSC | 6.0% |
| BA | 54.0 | 14.68 | St | 39.4% |
| BMA | 26.0 | 7.84 | BA | 29.3% |
| St | 0 | 0.00 | BMA | 25.4% |
| | 1st stage weight (g) | 31.10 | | |
| (2nd stage) | | | | |
| St | 56.2 | 29.15 | | |
| BA | 18.7 | 11.96 | | |
| BMA | 25.1 | 17.79 | | |
| | 2nd stage weight (g) | 58.90 | | |
| 1st stage Tg -7.8 °C | | | Overall Tg +6.1 °C | |
| 2nd stage Tg +30.4 °C | | | | |

| Example 12 recipe | | | | |
|---|---|---|---|---|
| Monomer | Monomer levels (mole %) | Charge (g) | Overall monomer levels (mole %) | |
| (1st stage) | | | | |
| SSC | 20.0 | 8.33 | SSC | 6.0% |
| BA | 55.9 | 14.75 | St | 30.7% |
| BMA | 24.1 | 7.05 | BA | 25.3% |
| St | 0 | 0.00 | BMA | 37.9% |
| | 1st stage weight (g) | 30.13 | | |
| (2nd stage) | | | | |
| St | 43.8 | 22.08 | | |
| BA | 12.3 | 7.65 | | |
| BMA | 43.8 | 30.14 | | |
| | 2nd stage weight (g) | 59.87 | | |
| 1st stage Tg -9.2° C | | | Overall Tg +15° C | |
| 2nd stage Tg +29.2° C | | | | |

| Example 13 recipe | | | | |
|---|---|---|---|---|
| Monomer | Monomer levels (mole %) | Charge (g) | Overall monomer levels (mole %) | |
| (1st stage) | | | | |
| SSC | 20.0 | 9.12 | SSC | 6.0% |
| BA | 80.0 | 23.13 | St | 56.1% |
| BMA | 0 | 0.00 | BA | 37.9% |
| St | 0 | 0.00 | BMA | 0.0% |
| | 1st stage weight (g) | 32.25 | | |
| (2nd stage) | | | | |
| St | 80.0 | 44.16 | | |
| BA | 20.0 | 13.59 | | |
| BMA | 0.0 | 0.00 | | |
| | 2nd stage weight (g) | 57.75 | | |
| 1st stage Tg -25.5° C | | | Overall Tg +16.7° C | |
| 2nd stage Tg +47° C | | | | |

| Example 14 recipe | | | | |
|---|---|---|---|---|
| Monomer | Monomer levels (mole %) | Charge (g) | Overall monomer levels (mole %) | |
| (1st stage) | | | | |
| SSC | 20.0 | 18.90 | SSC | 6.0% |
| BA | 55.0 | 32.94 | St | 25.5% |
| BMA | 25.0 | 16.61 | BA | 26.7% |
| St | 0 | 0.00 | BMA | 32.7% |
| | 1st stage weight (g) | 68.44 | MMA | 9.0% |
| (2nd stage) | | | | |
| St | 36.5 | 41.36 | | |
| BA | 14.6 | 20.36 | | |
| BMA | 36.0 | 55.80 | | |
| MMA | 12.9 | 14.04 | | |
| | 2nd stage weight (g) | 131.56 | | |
| 1st stage Tg -8.5° C | | | Overall Tg +15.9° C | |
| 2nd stage Tg +30.4° C | | | | |

| Example 15 recipe | | | | |
|---|---|---|---|---|
| Monomer | Monomer levels (mole %) | Charge (g) | Overall monomer levels (mole %) | |
| (1st stage) | | | | |
| SSC | 20.0 | 18.89 | SSC | 6.0% |
| BA | 55.0 | 32.92 | St | 25.6% |
| BMA | 25.0 | 16.60 | BA | 23.2% |
| St | 0 | 0.00 | BMA | 36.1% |
| | 1st stage weight (g) | 68.40 | MMA | 9.0% |
| (2nd stage) | | | | |
| St | 36.6 | 41.33 | | |
| BA | 9.5 | 13.17 | | |
| BMA | 40.9 | 63.07 | | |
| MMA | 12.9 | 14.03 | | |
| | 2nd stage weight (g) | 131.60 | | |
| 1st stage Tg -8.5° C | | | Overall Tg +19.3° C | |
| 2nd stage Tg +36.1° C | | | | |

| Example 16 recipe | | | | |
|---|---|---|---|---|
| Monomer (1st stage) | Monomer levels (mole %) | Charge (g) | Overall monomer levels (mole %) | |
| SSC | 20.0 | 18.63 | SSC | 6.0% |
| BA | 55.0 | 32.47 | St | 25.4% |
| BMA | 25.0 | 16.37 | BA | 16.5% |
| St | 0 | 0.00 | BMA | 43.1% |
| | 1st stage weight (g) | 67.47 | MMA | 9.0% |
| (2nd stage) | | | | |
| St | 36.3 | 40.77 | | |
| BA | 0.0 | 0.00 | | |
| BMA | 50.9 | 77.93 | | |
| MMA | 12.8 | 13.84 | | |
| | 2nd stage weight (g) | 132.53 | | |
| 1st stage Tg -8.5° C | | | Overall Tg +25.6° C | |
| 2nd stage Tg +46.5° C | | | | |

EXAMPLES 17 to 32

The polymer systems of Examples 1 to 16 were formulated in model paint compositions (Examples 17 to to 32) by admixture with cuprous chloride, using xylene as an organic solvent liquid carrier medium (polymer system/cuprous oxide 65/35 v/v; polymer system/xylene 50/50; solids content 80 wt%). The compositions were tested for erodibility by coating onto PVC plates, immersing in sea water (about 16° C) and periodically (usually daily) removing and drying to estimate the weight loss; the results are expressed in weight loss per unit area per day (g $cm^{-3}$ $day^{-1}$). The results are given in the following table.

| Ex N° | Source of polymer system | Overall SSC level (mole %) | Overall BMA level (mole %) | Tg 1st stage (° C) | Tg Overall (° C) | Wt loss rate $gcm^{-2}day^{-1}$ (x $10^{-4}$) |
|---|---|---|---|---|---|---|
| 17 | Ex 1 | 6.0 | 32.8 | -8.5 | +16.2 | 9.7 |
| 18 | Ex 2 | 5.0 | 33.1 | -8.5 | +15.4 | 6.0 |
| 19 | Ex 3 | 4.0 | 35.4 | -8.5 | +15.2 | 1.0 |
| 20 | Ex 4 | 3.0 | 35.5 | -8.5 | +15.1 | 0.1 |
| 21 | Ex 5 | 2.0 | 35.7 | -8.5 | +15.0 | 0 |
| 22 | Ex 6 | 12.5 | 8.9 | -15.9 | +10.6 | 1.5 |
| 23 | Ex 7 | 12.4 | 15.0 | -14.0 | +2.4 | 18.0 |
| 24 | Ex 8 | 12.5 | 21.4 | -14.0 | +2.6 | 1000 |
| 25 | Ex 9 | 6.0 | 32.4 | +9.9 | +15.5 | 1.25 |
| 26 | Ex 10 | 5.9 | 32.4 | +0.1 | +5.2 | 6.6 |
| 27 | Ex 11 | 6.0 | 25.4 | -7.8 | +6.1 | 35.0 |
| 28 | Ex 12 | 6.0 | 37.9 | -9.2 | +15.0 | 100 |
| 29 | Ex 13 | 6.0 | 37.9 | -25.5 | +16.7 | 1.25 |
| 30 | Ex 14 | 6.0 | 32.7 | -8.5 | +15.9 | 17.0 |
| 31 | Ex 15 | 6.0 | 36.1 | -8.5 | +19.3 | 4.2 |
| 32 | Ex 16 | 6.0 | 43.1 | -8.5 | +25.6 | 0.5 |

The data has been arranged in the table to illustrate the influence of certain aspects of polymer composition design on the weight loss rate.

Examples 17 to 21 show the effect of decreasing the overall level of sulphonate in the polymer system (keeping other parameters substantially constant).

Examples 22 to 24 show that, for a substantially constant sulphonate level, increasing the overall level of BMA in the polymer can cause significant increases in weight loss rate.

Examples 25 to 29 illustrate that decreasing the Tg of the first stage polymers (by varying the stage 1 level of BA and BMA), keeping overall sulphonate level constant, tends to increase water loss rate, although the effect is not uniform.

Examples 30 to 32 show that increasing the overall Tg of the polymer system, keeping the overall sulphonate level and the Tg of stage 1 polymer constant, tends to decrease the water rate loss.

EXAMPLES 33 and 34 (Comparative)

A single stage polymer (Example 33) was made using the same monomers and at the same levels as the overall levels of the 2-stage polymer system of Example 8 (but all being used in one stage). The recipe was thus:

| Monomer | Mole% |
|---|---|
| SSC | 12.5 |
| St | 23.1 |
| BA | 43.0 |
| BMA | 21.4 |

The polymer was made under the exactly same basic conditions as used for the 2-stage process (polymerisation temperature 90° C; xylene solvent; AIBN initiator, 2 mole%; 50% solids content).

A paint composition (Example 34) was made from the polymer of Example 33 in the same manner as used to make the paint compositions of Examples 17 to 32 (from the polymer systems of Examples 1 to 16). The composition was tested for erosion performance in the same way as for Examples 17 to 32.

The measured weight loss of the pigmented resin coating was found to be 0.1 x $10^{-4}$ $gcm^{-2}day^{-1}$ (as compared to a value of 1000 x $10^{-4}$ $gcm^{-4}day^{-1}$ for the coating of composition Example 24, made from the polymer system of Example 8).

EXAMPLES 35 and 36 (Comparative)

A single stage polymer (Example 35) was similarly made (as for Example 33), but this time using the same monomers and at virtually the same levels as the overall levels of the 2-stage polymer system of Example 1. The recipe was:

| Monomer | Mole% |
|---|---|
| SSC | 6.0 |
| St | 16.5 |
| BA | 26.7 |
| BMA | 32.7 |
| MMA | 18.1 |

A paint composition (Example 36) was similarly made from the polymer of Example 35 and likewise tested for erosion performance.

The measured weight loss of the pigmented resin coating was found to be zero (as compared to a value of 9.7 x $10^{-4}$ $gcm^{-2}day^{-1}$ for the coating of the composition of Example 17, made from the polymer system of Example 1).

These comparative examples show that a 2-stage polymer system of the invention provides significantly

improved water erosion performance in comparison to that of a single polymer having the same monomers and at the same levels as the overall levels of the 2-stage polymer system.

## Claims

1. Process for the production of a polymer system, which process comprises:

(i) performing a free-radical-initiated polymerisation in an organic solvent medium using a monomer mixture comprising 5 to 40 mole% of styrene sulphonyl halide and at least one monomer selected from styrene and one or more other olefinically unsaturated monomers, and wherein at least 70 weight% of the styrene sulphonyl halide used in said polymerisation (i) is present at the start of the polymerisation, thereby to form a polymer A;

(ii) performing another free-radical-initiated polymerisation in an organic solvent medium using a monomer mixture which comprises not more than 10 mole% of styrene sulphonyl halide and also comprises at least one monomer selected from styrene and one or more other olefinically unsaturated monomers, thereby to form a polymer B;

and wherein either polymerisation (i) is performed before polymerisation (ii) in which case polymerisation (ii) is carried out in the presence of polymer A, or polymerisation (ii) is performed before polymerisation (i) in which case polymerisation (i) is carried out in the presence of polymer B,

and wherein the level of styrene sulphonyl halide employed on the basis of all the monomers employed in polymerisations (i) and (ii) is within the range of from 4 to 20 mole%, and wherein styrene must be employed in (i) and/or (ii) to provide a level of styrene which is at least 10 mole% based on all the monomers employed in (i) and (ii), and wherein one or more other olefinically unsaturated monomers must be employed in (i) and/or (ii) to provide a level of other olefinically unsaturated monomer(s) which is at least 10 mole% based on all the monomers employed in (i) and (ii); and

(iii) esterifying at least 50% of the sulphonyl halide groups in the polymer system so formed using an alkanol of 1 to 5 carbon atoms in the alkyl group to form corresponding sulphonate alkyl ester groups.

2. Process according to claim 1 wherein the level of styrene sulphonyl halide in the monomer mixture of polymerisation (i) is within the range of from 5 to 30 mole %.

3. Process according to either claim 1 or claim 2 wherein substantially 100 weight % of the styrene sulphonyl halide used in polymerisation (i) is present at the start of the polymerisation.

4. Process according to any one of the preceding claims wherein the level of styrene sulphonyl halide in the monomer mixture of polymerisation (ii) is not more than 5 mole %.

5. Process according to any one of the preceding claims wherein polymerisation (i) is performed before polymerisation (ii).

6. Process according to any one of the preceding claims wherein the level of styrene sulphonyl halide employed on the basis of all the monomers employed in polymerisations (i) and (ii) is within the range of from 4 to 15 mole %.

7. Process according to any one of the preceding claims wherein styrene is employed in (i) and/or (ii) to provide a level of styrene which is within the range of from 10 to 60 mole % based on all the monomers employed in (i) and (ii).

8. Process according to any one of the preceding claims wherein said one or more other olefinically unsaturated monomers is employed in (i) and/or (ii) to provide a level thereof which is within the range of from 25 to 86 mole % based on all the monomers employed in (i) and (ii).

9. Process according to any one of the preceding claims wherein in step (iii) at least 80% of the sulphonyl halide groups in the polymer system so formed are esterified to corresponding sulphonate alkyl ester groups.

10. Process according to any one of the preceding claims wherein in step (iii), the alkanol employed is methanol, thereby to form sulphonate methyl ester groups upon esterification.

11. Process according to any one of the preceding claims wherein the styrene sulphonyl halide employed is styrene sulphonyl chloride.

12. Process according to any one of the preceding claims wherein said one or more other olefinically unsaturated monomers comprises at least one ester of acrylic or methacrylic acid of formula:

$CH_2 = CR^1COOR^2$

where $R^1$ is H or methyl and $R^3$ is alkyl or cycloalkyl of 1 to 20 carbon atoms.

13. Process according to any one of the preceding claims wherein at least one other olefinically unsaturated monomer which is at least one alkyl methacrylate having 1 to 5 carbon atoms in the alkyl group is included in polymerisation (i) and/or polymerisation (ii).

14. Process according to claim 13 wherein said at least one alkyl methacrylate is employed in at least polymerisation (ii).

15. Process according to either claim 13 or claim 14 wherein said at least one alkyl methacrylate is employed in both polymerisation (i) and polymerisation (ii).

16. Process according to any one of claims 13 to 15 wherein the level of alkyl methacrylate(s) used in polymerisation (i) is within the range of 0 to 50 mole%.

17. Process according to any one of claims 13 to 16 wherein the level of alkyl methacrylate used in polymerisation (ii) is at least 10 mole%.

18. Process according to any one of claims 13 to 17 wherein the overall level of alkyl methacrylate(s) used in (i) and (ii) is at least 5 mole%.

19. Process according to any one of claims, 13 to 18 wherein said at least one alkyl methacrylate is selected from methyl methacrylate and n-butyl acrylate.

20. Process according to any one of the preceding claims wherein at least one olefinically unsaturated monomer which is at least one alkyl acrylate having 1 to 8 carbon atoms in the alkyl group is included in polymerisation (i) and/or polymerisation (ii).

21. Process according to claim 20 wherein said at least one alkyl acrylate is employed in at least polymerisation (i).

22. Process according to claim 21 wherein said at least one alkyl acrylate is employed in both polymerisation (i) and polymerisation (ii).

23. Process according to any one of claims 20 to 22 wherein the level of alkyl acrylate(s) employed in polymerisation (i) is within the range of 20 to 90 mole%.

24. Process according to anyone of claims 20 to 23 wherein the level of alkyl acrylate(s) employed in polymerisation (ii) is within the range of from 0 to mole%.

25. Process according to any one of claims 20 to 24 wherein the overall Level of alkyl acrylate(s) used in (i) and (ii) is at least 10 mole%.

26. Process according to any of claims 20 to 25 wherein said at least one alkyl acrylate is selected from n-butyl acrylate and 2-ethylhexyl acrylate.

27. Process according to any one of the preceding claims wherein styrene is used only in polymerisation (ii) and is not employed in polymerisation (i).

28. Process according to any one of the preceding claims wherein the level of styrene used in (ii) is within the range of 10 to 100 mole%.

29. Process according to any one of the preceding claims which comprises the following monomers:
- in polymerisation (i);
5 to 30 mole% of styrene sulphonyl halide,
0 mole% of styrene,
0 to 50 mole% of at least one C1 to C5 alkyl methacrylate, and
20 to 90 mole% of at least one C1 to C8 alkyl acrylate
- in polymerisation (ii);
0 to 10 mole% of styrene sulphonyl chloride, 20 to 80 mole% of styrene,
10 to 70 mole% of at least one C1 to C5 alkyl methacrylate, and
0 to 50 mole% of at least one C1 to C8 alkyl acrylate.
- overall in (i) and (ii);
4 to 15 mole% of styrene sulphonyl halide,
10 to 60 mole% styrene,
5 to 65 mole% of at least one C1 to C5 alkyl methacrylate, and
10 to 50 mole% of at least one C1 to C8 alkyl acrylate.

30. Process according to any one of the preceding claims wherein the organic solvent employed in (i) and (ii) is xylene.

31. Process according to any one of the preceding claims wherein the glass transition temperature (Tg) of the polymer system so produced is within the range of from 0 to 30 °C.

32. Process according to any one of the preceding claims wherein the Tg of the individual polymer produced in (i) is within the range of from -30 to 30 °C.

33. Process according to any one of the the preceding claims wherein the Tg of the individual polymer produced in (ii) is within the range 10 to 100 °C.

34. Polymer system produced a process according to any one of the preceding claims.

35. Coating composition which comprises a polymer system according to claim 34 carried in an organic solvent medium.

36. Coating composition according to claim 35 in the form of a paint composition.

37. The treatment of a surface using a composition according to either claim 35 or claim 36 so as to provide a water-erodible coating there on.